# EUROPÄISCHE PATENTSCHRIFT

(11) **EP 1 327 799 B1**
(45) Veröffentlichungstag und Bekanntmachung des Hinweises auf die Patenterteilung: **13.01.2010**
(21) Anmeldenummer: 02021794.9
(22) Anmeldetag: 26.09.2002
(51) Int. Cl.: F16J 15/08

(54) **Zylinderkopfdichtung zum Ausgleich von lokalen Absenkungen im Bereich des Verpressungsbegrenzers**
Cylinder head gasket for compensating local depressions in the region of the compression limiter
Joint de culasse pour la compensation de dépressions locales dans la zone du limiteur de compression

(30) Priorität: 09.01.2002 DE 10200544
(43) Veröffentlichungstag der Anmeldung: 16.07.2003
(73) Patentinhaber: Federal-Mogul Sealing Systems GmbH, 57562 Herdorf (DE)
(72) Erfinder: Stapel, Klaus, 57074 Siegen (DE)
(74) Vertreter: Becker Kurig Straus

(56) Entgegenhaltungen:
- EP-A- 0 797 029
- EP-A- 0 915 272
- US-A- 5 568 932
- US-A- 5 601 292
- US-A- 5 639 101
- US-A- 5 664 790

## Beschreibung

Die vorliegende Erfindung betrifft eine metallische Zylinderkopfdichtung.

Bei Motoren mit eingesetzen und übergossenen Zylinderlaufbuchsen kommt es häufig aufgrund der hohen Temperaturen zu lokalen Absenkungen im Bereich des Verpressungsbegrenzers. Konventionell eingesetzte Zylinderkopfdichtungen können diesen Absenkungen bzw. dem Versatz nicht folgen. Dies führt zu Verschleißerscheinungen und zu Undichtigkeiten zwischen den Dichtflächen von Zylinderkopf und Motorblock .

Eine derartige Dichtung ist aus dem Dokument US-A-563910 bekannt.

Aus der JP 08178070 ist bereits eine Zylinderkopfdichtung mit einer Funktionlage bekannt, die in ihrem dem Brennraum zugewandten Bereich eine zusätzliche Halbsicke oder eine weitere Funktionlage an der inneren Seite der vorstehenden Funktionslage aufweist, um das Auftreten von zusätzlichen Belastungen zu verhindern, wenn ein Versatz zwischen Zylinderkopf und - buchse erzeugt wird. Eine derartige Zylinderkopfdichtung ist aber nicht in der Lage, gleichzeitig den erforderlichen Flexibilitäts- und Abdichtungsanforderungen zu genügen.

Aufgabe der Erfindung ist es daher, die aus dem Stand der Technik bekannte Zylinderkopfdichtung derart weiterzuentwickeln, so dass sie in der Lage ist, lokale Absenkungen im Bereich des Verpressungsbegrenzers zu kompensieren, insbesondere bei Motoren mit übergossenen Zylinderlaufbuchsen.

Dies wird bei einer gattungsgemäßen metallischen Zylinderkopfdichtung nach Anspruch 1 dadurch erreicht, dass an einer ersten Funktionslage ein Verpressungsbegrenzer für eine Vollsicke an einer der zweiten Funktionslage zugewandten Seite angeordnet ist und an bzw. in der zweiten Funktionslage in der Ebene des Verpressungsbegrenzers eine Lage mit einem elastischen Element angeordnet ist. Das elastische Element erstreckt sich in der vertikalen Ebene des Verpressungsbegrenzers. Das elastische Element erhöht die Flächenpressung derart, so dass jederzeit eine ausreichende Abdichtpressung vorhanden ist, weil das elastische Element der zweiten Funktionslage die Zylinderkopfdichtung in die Lage versetzt, den Absenkungen der Zylinderlaufbuchse bzw. des übergossenen Bereiches der Zylinderlaufbuchse dauerelastisch zu folgen.

Vorzugsweise ist der Verpressungsbegrenzer eine Ringeinlage, die vorzugsweise mit der ersten Funktionslage derart schweißtechnisch verbunden ist, dass sie gasdicht zueinander angeordnet sind. Dies wird optimalerweise dadurch erreicht, dass die Ringeinlage durch Schweißpunkte mit der ersten Funktionslage verbunden wird.

Das elastische Element umfasst vorzugsweise eine Halbsicke. Halbsicken sind Vollsicken gegenüber einerseits aus räumlichen Gründen, d. h. aufgrund des Platzbedarfs, und andererseits durch ihre spezifische Flächenpressung vorzuziehen. Eine Halbsicke stützt sich beidseitig über jeweils einen einzigen Kontaktbereich gegen die benachbarte Lage ab, um so im eingebauten Zustand in beiden Kontaktbereichen der Zylinderkopfdichtung etwa dieselbe spezifische Flächenpressung zu ergeben, während bei einer Vollsicke, die sich auf der einen Seite über einen Kontaktbereich und auf der anderen Seite über zwei Kontaktbereiche gegen benachbarte Lagen abstützt, die spezifische Flächenpressung auf der einen Seite nur halb so gross ist wie auf der anderen Seite.

Gemäß einer bevorzugten Ausführungsform ist die Lage mit der Halbsicke einstückig mit der zweiten Funktionslage verbunden, so dass eine Materialersparnis erreicht und durch das Fehlen von Schweißnahten oder dergleichen mögliche Bruchstellen bzw. fehlerbehaftete Stellen verhindert werden.

Bei einer bevorzugten Ausführungsform ist der an die Halbsicke angrenzende Bereich planar. Dadurch wird die Dichtpressung weiterhin gesteigert. Vorzugsweise ist der Verpressungsbegrenzer ebenfalls planar.

Im eingebauten Zustand stützt sich das elastische Element auf der Zylinderlaufbuchse ab, um eine möglichst hohe Elastizität und somit eine möglichst hohe Kompensation von ungleichmäßigen Belastungen und eine verbesserte Abdichtung in diesem Bereich zu erzielen.

Weiterhin kann entweder zwischen der ersten und der zweiten Funktionslage mindestens eine weitere Trägerlage angeordnet sein oder unterhalb der zweiten Funktionslage mindestens eine weitere Trägerlage vorgesehen sein. Durch die Anordnung von zusätzlichen Lagen kann die Flächenpressung und die Abdichtung weiterhin gesteuert und variiert werden.

Die vorliegende Erfindung wird anhand von Ausführungsbeispielen in den anhängenden Zeichnungen dargestellt und wird im folgenden näher erläutert, wobei:
Fig. 1 eine Querschnittsansicht gemäß einer ersten Ausführungsform der erfindungsgemäßen metallischen Zylinderkopfdichtung ist.
Fig. 2 eine Querschnittsansicht gemäß einer zweiten Ausführungsform der erfindungsgemäßen metallischen Zylinderkopfdichtung ist.
Fig. 3 eine Querschnittsansicht gemäß einer dritten Ausführungsform der erfindungsgemäßen metallischen Zylinderkopfdichtung ist.

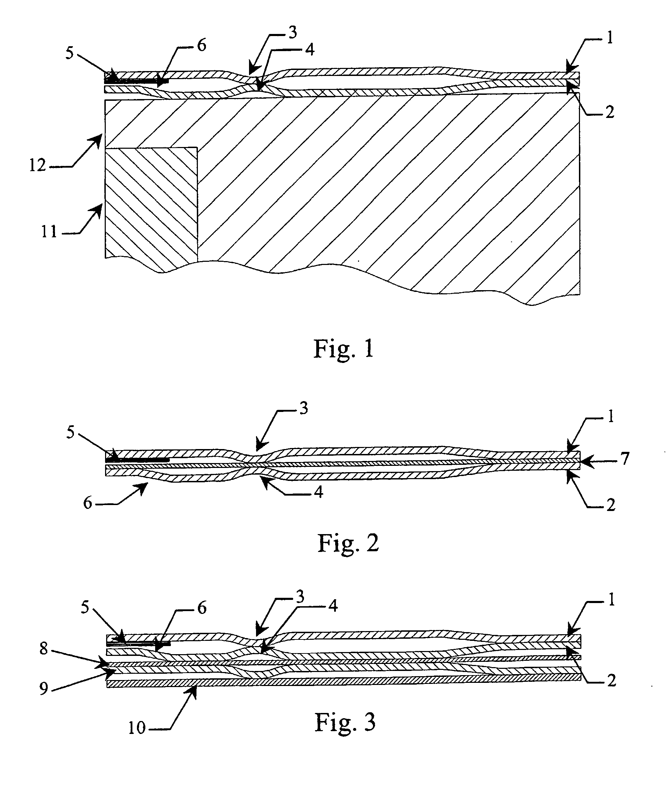

Bei der in Fig. 1 gezeigten Ausführungsform einer erfindungsgemäßen metallischen Zylinderkopfdichtung sind zwei Funktionslagen 1, 2 mit Öffnungen entsprechend den Brennkammern von Brennkraftmaschinen und mit jeweils einer die Brennkammern umschließenden Vollsicke 3,4 vorgesehen. An der ersten Funktionslage 1 ist ein Verpressungsbegrenzer 5 für die Vollsicke 3 an der zweiten Funktionslage 2 zugewandten Seite angeordnet und an bzw. in der zweiten Funktionslage 2 ist eine Lage mit einem elastischen Element 6 in der Ebene des Verpressungsbegrenzers 4 angeordnet. Dadurch wird dieser Bereich flexibilisiert und in die Lage versetzt, den Absenkungen der Buchse 11 bzw.- des übergossenen Bereichs 12 dauerelastisch zu folgen, so dass auch bei unregelmäßigen und/oder ungleichmäßigen Belastungen eine ausreichende Flächenpressung zur sicheren Abdichtung bereitgestellt wird. Unter Bezugnahme auf Fig. 1 ist das elastische Element 6 vorzugsweise eine Halbsicke.

Bei der in Fig. 2 gezeigten Ausführungsform einer erfindungsgemäßen metallischen Zylinderkopfdichtung ist zwischen den gemäß Fig. 1 beschriebenen beiden Funktionslagen 1, 2 eine weitere Trägerlage 7 angeordnet. Die Trägerlage 7 gemäß Fig. 2 ist planar, sie kann aber auch gegebenenfalls eine Kröpfung aufweisen, sie kann eine Distanzlage, eine Ausgleichslage oder eine Funktionslage sein. Die Trägerlage 7 kann sich bis zu der bzw. auf die Zylinderlaufbuchse erstrecken, so dass sie auf ihr aufliegt. Ebenfalls ist eine Variation der Dicke der Trägerlage 7 möglich. Die Trägerlage 7 kann entweder eine vorbestimmte konstante Dicke oder eine unterschiedliche Dicke aufweisen, so dass die Flächenpressung gesteuert werden kann.

Bei der in Fig. 3 gezeigten Ausführungsform einer erfindungsgemäßen metallischen Zylinderkopfdichtung sind unterhalb der zweiten Funktionslage 2 drei weitere Trägerlagen 8, 9, 10 angeordnet. Unter Bezugnahme auf Fig. 3 ist die Trägerlage 8 eine planare Lage, die angeordnet ist, um die auf der Funktionslage 2 und der Trägerlage 9 angeordneten Sicken abzustützen. Die Sikken der Trägerlage 9 werden zusätzlich durch die benachbarte Trägerlage 10 abgestützt. Die vorstehend erwähnten Trägerlagen 8, 9, 10 können Distanzlagen und/oder Funktionslagen umfassen. Bei dieser Ausführungsform können die Trägerlagen 8, 9, 10 unterschiedliche Dicken aufweisen.

Bei allen vorstehenden Ausführungsformen wird die Flexibilität des Verpressungsbegrenzerbereichs erhöht, so dass sich die metallische Zylinderkopfdichtung besser an die Bedingungen der Zylinderlaufbuchsen und des Motorblocks anpassen kann. Dadurch werden die üblicherweise auftretenden Undichtigkeiten verhindert.

Alternativ können die erste und die zweite Funktionslage 1, 2 mit zusätzlichen Sicken versehen sein. Desweiteren können die Funktionslagen 1, 2 und/oder die Trägerlagen 7, 8, 9, 10 aus verschiedenen Materialien gefertigt sein. Weiterhin können die Funktionslagen 1,2 und oder Trägerlagen 7, 8, 9, 10 mit einer Beschichtung versehen werden, die zur Mikroabdichtung zwischen Zylinderkopfdichtung und den angrenzenden Flächen der Zylinderlaufbuchsen und des Motorblocks dient oder den Lagen bestimmte gewünschte Oberflächeneigenschaften verleiht. Dergleichen können die Lagen 1, 2, 7, 8, 9, 10 glatt und planar oder profiliert sein.

## Patentansprüche

1. Metallische Zylinderkopfdichtung für Brennkraftmaschinen mit eingesetzten Zylinderlaufbuchsen mit mindestens zwei Funktionslagen (1,2) mit Öffnungen entsprechend den Brennkammern der Brennkraftmaschinen, wobei die Funktionslagen (1,2) jeweils eine die Brennkammern umschließende Vollsicke (3,4) enthalten, **dadurch gekennzeichnet, dass** an der ersten Funktionslage (1) ein Verpressungbegrenzer (5) für die Vollsicke (3) an der der zweiten Funktionslage (2) zugewandten Seite angeordnet ist und an bzw. in der zweiten Funktionslage (2) in der Ebene des Verpressungsbegrenzers (5) eine Lage mit einem elastischen Element (6) angeordnet ist, wobei sich das elastische Element (6) in der vertikalen Ebene des Verpressungsbegrenzers (5) erstreckt, und wobei sich die erste Funktionslage (1) unmittelbar benachbart zu der zweiten Funktionslage (2) befindet.

2. Metallische Zylinderkopfdichtung gemäß Anspruch 1, **dadurch gekennzeichnet, dass** der Verpressungsbegrenzer (5) eine Ringeinlage ist.

3. Metallische Zylinderkopfdichtung gemäß Anspruch 2, **dadurch gekennzeichnet, dass** die Ringeinlage mit der ersten Funktionslage (1) schweißtechnisch verbunden ist.

4. Metallische Zylinderkopfdichtung gemäß irgendeinem der vorstehenden Ansprüche, **dadurch gekennzeichnet, dass** das elastische Element (6) eine Lage mit einer Halbsicke ist.

5. Metallische Zylinderkopfdichtung gemäß Anspruch 4, **dadurch gekennzeichnet, dass** die Lage mit der Halbsicke mit der zweiten Funktionslage (2) einstückig verbunden ist.

6. Metallische Zylinderkopfdichtung gemäß Anspruch 5, **dadurch gekennzeichnet, dass** der an die Halbsicke angrenzende Bereich am Rand der Brennkammern planar ist.

7. Metallische Zylinderkopfdichtung gemäß irgendeinem der vorstehenden Ansprüche, **dadurch gekennzeichnet, dass** der Verpressungsbegrenzer (5) planar ist.

8. Metallische Zylinderkopfdichtung gemäß irgendeinem der vorstehenden Ansprüche,
**dadurch gekennzeichnet, dass** im eingebauten Zustand das elastische Element (6) sich auf der Zylinderlaufbuchse abstützt.

9. Metallische Zylinderkopfdichtung gemäß irgendeinem der Ansprüche 1 bis 8, **dadurch gekennzeichnet, dass** unterhalb der zweiten Funktionslage (2) mindestens eine Trägerlage (8) angeordnet ist.

## Claims

1. A metal cylinder head gasket for combustion engines with inserted cylinder liners with at least two function layers (1, 2) with openings corresponding to the combustion chambers of the combustion engines, wherein the function layers (1, 2) each contain a full bead (3, 4) enclosing the combustion chambers, **characterized in that** on the first function layer (1) a compression limiter (5) for the full bead (3) is arranged on the side facing the second function layer (2) and on or in the second function layer (2) in the plane of the compression limiter (5) a layer having an elastic element (6) is arranged, wherein the elastic element (6) extends in the vertical plane of the compression limiter (5), and wherein the first function layer (1) is located immediately adjacent to the second function layer (2).

2. The metal cylinder head gasket according to Claim 1, **characterized in that** the compression limiter (5) is a ring insert.

3. The metal cylinder head gasket according to Claim 2, **characterized in that** the ring insert is joined to the first function layer (1) through welding.

4. The metal cylinder head gasket according to any one of the preceding claims, **characterized in that** the elastic element (6) is a layer with a half bead.

5. The metal cylinder head gasket according to Claim 4, **characterized in that** the layer with the half bead is joined in one piece with the second function layer (2).

6. The metal cylinder head gasket according to Claim 5, **characterized in that** the region adjoining the half bead is planar at the edge of the combustion chambers.

7. The metal cylinder head gasket according to any one of the preceding claims, **characterized in that** the compression limiter (5) is planar.

8. The metal cylinder head gasket according to any one of the preceding claims, **characterized in that** in the installed state the elastic element (6) supports itself on the cylinder liner.

9. The metal cylinder head gasket according to any one of the Claims 1 to 8, **characterized in that** below the second function layer (2) at least one carrier layer (8) is arranged.

## Revendications

1. Joint de culasse métallique pour moteurs à combustion interne comportant des chemises de cylindres insérées avec au moins deux couches fonctionnelles (1, 2) présentant des ouvertures correspondant aux chambres de combustion des moteurs à combustion interne, dans lequel les couches fonctionnelles (1, 2) contiennent respectivement une moulure complète (3, 4) enveloppant les chambres de combustion, **caractérisé en ce que** sur la première couche fonctionnelle (1) un limiteur de compression (5) destiné à la moulure complète (3) est disposé sur le côté tourné vers la deuxième couche fonctionnelle (2) et sur, resp. dans la deuxième couche fonctionnelle (2) dans le plan du limiteur de compression (5) une couche comportant un élément élastique (6) est disposée, dans lequel l'élément élastique (6) s'étend dans le plan vertical du limiteur de compression (5), et dans lequel la première couche fonctionnelle (1) se trouve directement à côté de la deuxième couche fonctionnelle (2).

2. Joint de culasse métallique selon la revendication 1, **caractérisé en ce que** le limiteur de compression (5) est un insert annulaire.

3. Joint de culasse métallique selon la revendication 2, **caractérisé en ce que** l'insert annulaire est relié par soudure à la première couche fonctionnelle (1).

4. Joint de culasse métallique selon une quelconque des revendications précédentes, **caractérisé en ce que** l'élément élastique (6) est une couche pourvue d'une demie-moulure.

5. Joint de culasse métallique selon la revendication 4, **caractérisé en ce que** la couche pourvue de la demie-moulure est reliée en un seul tenant à la deuxième couche fonctionnelle (2).

6. Joint de culasse métallique selon la revendication 5, **caractérisé en ce que** la zone attenante à la demie-moulure est planaire sur le bord des chambres de combustion.

7. Joint de culasse métallique selon une quelconque des revendications précédentes, **caractérisé en ce que** le limiteur de compression (5) est planaire.

8. Joint de culasse métallique selon une quelconque des revendications précédentes, **caractérisé en ce que** en l'état monté l'élément élastique (6) s'appuie sur la chemise de cylindre.

9. Joint de culasse métallique selon une quelconque des revendications 1 à 8, **caractérisé en ce que** en dessous de la deuxième couche fonctionnelle (2), au moins une couche porteuse (8) est disposée.
